**Europäisches Patentamt**

(19) **European Patent Office**

**Office européen des brevets**

(11) Numéro de publication: **0 215 692 B1**

(12) **FASCICULE DE BREVET EUROPEEN**

(45) Date de publication du fascicule du brevet: 14.03.90

(51) Int. Cl.⁴: **C12P 19/06**, C08B 37/00, E21B 43/22

(21) Numéro de dépôt: 86401699.3

(22) Date de dépôt: 30.07.86

(54) **Procédé de préparation d'un polysaccharide modifié.**

(30) Priorité: 14.08.85 FR 8512382

(43) Date de publication de la demande: 25.03.87 Bulletin 87/13

(45) Mention de la délivrance du brevet: 14.03.90 Bulletin 90/11

(84) Etats contractants désignés: AT DE FR GB IT NL SE

(56) Documents cités:
EP-A- 0 078 621
EP-A- 0 103 483
FR-A- 2 551 070
US-A- 4 299 825

CHEMICAL ABSTRACTS, vol. 102, no. 3, janvier 1985, page 547, abrégé 22819a, Columbus, Ohio, US; & RO-A-84 329 (PFIZER INC.) 30-06-1984

(73) Titulaire: RHONE-POULENC CHIMIE, 25, quai Paul Doumer, F-92408 Courbevoie Cédex(FR)

(72) Inventeur: Cros, Patrick, 1, rue des Monnales Collectif Champ persé, F-79500 - Melle(FR)
Inventeur: Pipon, Robert, 4, rue Eloi Ricard, F-79500 - Melle(FR)

(74) Mandataire: Tavernier, Colette et al, RHONE-POULENC INTERSERVICES Service Brevets Chimie 25, Quai Paul Doumer, F-92408 Courbevoie Cédex(FR)

## Description

L'invention concerne un procédé de traitement d'une solution aqueuse de polysaccharides, en particulier de gomme Xanthane. Les polysaccharides modifiés obtenus par le traitement sont spécialement efficaces pour la récupération assistée du pétrole à partir de gisements partiellement épuisés.

Les homo- et hétéropolysaccharides ou biopolymères obtenus par fermentation d'un hydrate de carbone sous l'action de bactéries du genre Xanthomonas ou Arthrobacter ou de champignons appartenant au genre Sclerotium ont trouvé de nombreuses applications industrielles en raison de leurs propriétés épaississantes et viscosifiantes.

L'une des applications connue de ces polysaccharides de type Gomme Xanthane est la récupération secondaire et tertiaire du pétrole. Dans cette application, on utilise des solutions aqueuses diluées à une concentration d'environ 300 à 3000 ppm pour déplacer l'huile des réservoirs partiellement épuisés. La Gomme Xanthane se caractérise en effet par une haute viscosité à basse concentration, une grande insensibilité à la salinité et à la nature des sels et une grande stabilité aux contraintes mécaniques. Toutefois, les solutions préparées à partir des grades industriels soit à partir du moût de fermentation, soit par dilution de la poudre précipitée et séparée à partir du moût, présentent l'inconvénient majeur de colmater rapidement les pores des formations rocheuses dans lesquelles elles sont injectées, provoquant ainsi des augmentations de pression indésirables et empêchant rapidement toute récupération supplémentaire d'huile. On sait que les origines de ce colmatage sont dues à la présence d'une part, de particules insolubles telles que débris cellulaires et bactéries non viables provenant de la fermentation, d'autre part d'un certain nombre d'aggrégats moléculaires translucides appelés microgels notamment si la solution est préparée avec du biopolymère qui a été précipité à partir du moût de fermentation.

De nombreuses méthodes ont déjà été proposées dans l'art antérieur en vue d'améliorer la viscosité et/ou la filtrabilité et l'injectabilité des solutions de polysaccharides, ces méthodes incluant des traitements thermiques, l'addition d'agents floculants, des traitements enzymatiques, associés ou non à une filtration par exemple sur terres diatomées ou à l'aide de membranes ultrafiltrantes.

Le traitement par la chaleur peut être réalisé soit en milieu neutre ou alcalin comme enseigné par les brevets US 3555447, 3591578, 3729460, 4182860, soit en milieu acide comme décrit dans la demande de brevet français publiée FR-A-2551070. Le traitement à pH acide dans les conditions du brevet FR-A-2551070 permet d'accroître la viscosité des solutions et d'améliorer notablement leur filtrabilité et leur injectivité. On a toutefois constaté que cette amélioration était encore insuffisante pour emploi comme fluide d'injection dans des milieux poreux de faible perméabilité, inférieure à environ 1 darcy.

Le Xanthane et les hétéropolysaccharides similaires contiennent des unités D-glucose, D-mannose et des radicaux glucuronique, pyruvique et acétyl en proportions variables dépendantes de la souche spécifique utilisée et des conditions de la fermentation.

On sait que le traitement alcalin élimine les groupements acétylés. Le procédé de desacétylation a été décrit dans le brevet US-A-3000790 qui indique que le Xanthane desacétylé permet d'obtenir des solutions visqueuses moins sensibles aux sels minéraux que le Xanthane natif. Le brevet US-A-3964972 enseigne que des hétéropolysaccharides modifiés sont obtenus par traitement en milieu alcalin à température élevée. Selon ce document, la desacétylation arrive presque immédiatement et il est probable que hydrolyse et dépolymérisation sont les mécanismes prédominants.

Par traitement à la chaleur en présence d'acide oxalique à pH = 3 les groupes pyruvate du Xanthane ont été retirés et le contenu en acétyl est demeuré inchangé (Carbohydr. Res. 1979, 76, 277-80). Par le procédé du brevet US-A-4182860, en milieu salin, on obtient des polysaccharides modifiés physiquement et chimiquement qui contiennent environ 20 % de moins de groupes pyruvates et environ 10 % de moins de groupes acetyl que le polysaccharide non modifié natif et qui résulte en une filtrabilité améliorée. Cependant la perte en groupes pyruvate peut engendrer une modification du comportement rhéologique des solutions.

La présente invention a pour but principal d'améliorer la filtrabilité et l'injectabilité des solutions aqueuses de polysaccharides sans dégradation de leur pouvoir viscosifiant de manière à permettre leur injection dans des milieux poreux de moyenne et faible perméabilité. L'invention a encore pour but de produire de manière économique des polysaccharides modifiés qui peuvent être mis en oeuvre en milieu salin et injectés sans colmatage dans des formations poreuses.

Conformément à l'invention, le procédé de préparation d'un polysaccharide modifié consiste en un traitement à la chaleur d'une composition aqueuse contenant 0,05 à 35 % en poids de polysaccharide et est caractérisé en ce que

a) on acidifie la composition par addition d'acide nitrique jusqu'à un pH compris entre 2 et 0,1

b) on chauffe la composition à la température de 50-100°C pendant une durée comprise entre 5 et 60 minutes

c) on refroidit la composition et on accroît le pH à une valeur de 5-7 par addition d'une base.

Le procédé de l'invention est appliqué à tout homo- et hétéropolysaccharide de poids moléculaire élevé obtenu par fermentation d'un hydrate de carbone sous l'action de microorganismes. La gomme Xanthane est synthétisée à l'aide de bactéries appartenant au genre Xanthomonas et plus particulièrement aux espèces décrites dans Bergey's manual of determinative bacteriology (8e édition - 1974 - Williams N. Wilkins C° Baltimore) telles que <u>Xanthomonas begoniae</u>, <u>Xanthomonas campestris</u>, <u>Xanthomonas carotae</u>, <u>Xanthomonas hederae</u>, <u>Xanthomonas incanae</u>, <u>Xanthomonas malvacearum</u>, <u>Xanthomonas papavericola</u>, <u>Xanthomonas phaseoli</u>, <u>Xanthomonas pisi</u>, <u>Xanthomonas vasculorum</u>, <u>Xanthomonas vesicatoria</u>, <u>Xanthomonas vitians</u>, <u>Xanthomonas pelargonii</u>. Parmi les autres microorganismes capables de produire des polysaccharides de propriétés similaires, on peut citer les bactéries appartenant au genre <u>Arthrobacter</u> et plus particulièrement les espèces <u>Arthrobacter stabilis</u>, <u>Arthrobacter viscosus</u> ; au genre <u>Erwinia</u> ; au genre <u>Azotobacter</u> et plus particulièrement l'espèce <u>Azotobacter indicus</u> ; au genre <u>Agrobacterium</u> et plus particulièrement les espèces <u>Agrobacterium radiobacter</u>, <u>Agrobacterium rhizogènes</u>, <u>Agrobacterium tumefaciens</u> ; ou les champignons appartenant au genre <u>Sclerotium</u> et plus particulièrement aux espèces <u>Sclerotium glucanicum</u>, <u>Sclerotium rolfsii</u> etc...

L'expérience a montré que certaines espèces sont capables de produire les polysaccharides avec une efficacité particulière. L'espèce <u>X.campestris</u> convient tout particulièrement bien pour la synthèse de la Gomme Xanthane.

On peut faire fermenter toute une variété d'hydrates de carbone avec les micro-organismes appartenant aux genres précités pour fabriquer le polysaccharide utilisé dans le procédé selon l'invention. Les hydrates de carbone qui peuvent convenir comprennent le glucose, le saccharose, le fructose, le maltose, le lactose, l'amidon. La fermentation de l'hydrate de carbone se fait en général dans un milieu aqueux renfermant jusqu'à 100 g/l de glucide. On sait que le milieu de fermentation peut comprendre, en outre, une source de phosphore, une source de magnésium qui est un activateur d'enzymes et une source d'azote que peut être d'origine organique, minérale ou mixte organique-minérale.

La préparation de la gomme Xanthane est décrite dans de nombreuses publications et de nombreux brevets. On peut se référer par exemple aux brevets US-A-3.020.206, US-A-3.020.207, US-A-3.391.060, US-A-4.154.654.

Le biopolymère peut être récupéré du moût par précipitation à l'aide d'un agent de précipitation, par exemple l'isopropanol, filtration et séchage.

Les compositions aqueuses contenant le polysaccharide que l'on traite conformément au procédé de l'invention peuvent être des solutions obtenues par dissolution de biopolymère en poudre de qualité commerciale. La dissolution peut être effectuée à l'aide d'eau déminéralisée ou d'eau de ville, éventuellement additionnée de sels minéraux. Dans une forme de réalisation avantageuse et préférentielle pour emploi ultérieur en récupération assistée du pétrole, on applique le procédé au moût entier de fermentation.

Par moût entier de fermentation, on entend les solutions aqueuses aussi bien que les émulsions résultant du processus de fermentation contenant les débris cellulaires, résidus bactériens, sels minéraux et autres ingrédients nécessaires à la fermentation, de même que les solutions diluées, concentrées et/ou filtrées de manière connue en soi. Les compositions résultant d'un procédé de fermentation en émulsion ont été décrites dans le brevet français No. 25.75178. A l'issue du processus de fermentation et production du polysaccharide, le moût peut contenir normalement environ 10 à 50 g/litre de biopolymère et son pH est avantageusement compris entre 6,5 et 7,5. Le moût peut être concentré de manière connue jusqu'à obtention d'une solution contenant jusqu'à environ 350 g de biopolymère par kg de moût.

La composition de biopolymère (moût entier ou solution reconstituée) est acidifiée à un pH compris entre 0,1 et 2, de préférence inférieur à 1,5 en présence d'acide nitrique puis est chauffée à une température comprise entre 50 et 100°C, de préférence 60-90°C et l'on maintient cette température pendant une période de temps comprise entre 5 minutes et 60 minutes, de préférence entre 10 et 45 minutes.

Après le traitement à la chaleur, la solution est refroidie et ajustée à un pH de 5-7 par addition d'une base telle que NaOH, KOH, NH₄OH. Les matières insolubles résiduelles de petites dimensions peuvent ultérieurement être éliminées par centrifugation ou filtration sur terres diatomées, filtres cartouche ou autre moyen.

Le biopolymère peut être isolé de la solution ou du moût par des moyens classiques, par exemple précipitation par un alcool inférieur, séchage par pulvérisation ou au tambour. La solution ou le moût peuvent également être concentrés par des moyens classiques comme l'évaporation ou l'ultrafiltration.

On peut également, si on le désire, ajouter un biocide ou une enzyme dans la solution qui a été traitée thermiquement ou à la poudre précipitée. En variante, si le biocide est stable dans les conditions de chauffage en milieu acide que l'on utilise, il peut être ajouté avant le stade du traitement à la chaleur.

Les polysaccharides obtenus par le traitement à la chaleur en présence d'acide nitrique selon l'invention sont chimiquement différents des polysaccharides natifs non modifiés. Le traitement résulte en une diminution du nombre de groupes acetyl par rapport au polysaccharide natif, mais de manière inattendue, le nombre de groupes pyruvique reste inchangé. Il a été constaté que la diminution des groupes acetyl par rapport au polysaccharide natif peut être comprise entre 5 et 80 % en fonction des conditions de pH, température et durée du traitement.

Ces polysaccharides modifiés ont une capacitité de filtration telle que au moins 1.000 ml d'une solution aqueuse contenant 1.000 ppm de polysaccharide et 11 % de sels dissous comprenant NaCl et des chlorures divalents dans le rapport 5/1 passent sans colmatage en moins de 10 minutes à travers un filtre Gelman Versapor ® de 47 mm de diamètre et 1,2 µm de diamètre de pores, sous une pression constante de 3 bars, après préfiltration sur un filtre MF-Millipore ® de diamètre de pores 5 µm.

Les moûts de fermentation et solutions aqueuses contenant les polysaccharides modifiés par le procédé de l'invention, de même que les poudres isolées à partir de ces solutions sont utiles dans toutes les applications de la gomme Xanthane et plus spécialement dans les applications requérant des produits clarifiés. La haute performance de filtration associée au pouvoir viscosifiant élevé les rend particulièrement aptes à être utilisés dans l'industrie du pétrole et plus spécifiquement comme additif pour le contrôle de mobilité des fluides aqueux lors d'une opération de récupération assistée du pétrole comprenant l'injection dudit fluide aqueux contenant le polysaccharide par un puits d'injection dans une formation souterraine pour déplacer l'huile de la formation vers-un puits de production.

Les exemples ci-après sont donnés à titre illustratif et non limitatif de l'invention.

Dans les exemples 1 à 6, on utilise des moûts entiers de fermentation de gomme Xanthane produite par X. Campestris.

Exemple 1

Dans des récipients contenant chacun 10 kg de moût (solutions à 22 g de matières sèches précipitables à l'isopropanol par kg de moût, on ajoute de l'acide nitrique à 58 % (pds/pds) en quantité suffisante pour abaisser le pH à une valeur comprise entre 0,2 et 2 comme indiqué dans le Tableau I. Le moût est préchauffé une minute par circulation dans un serpentin immergé dans un bain d'huile pour l'amener à la température de traitement, puis il est maintenu à la température de 80°C pendant 15 minutes dans une enceinte thermostatée. Les solutions sont ensuite refroidies à température ambiante puis le pH est ajusté à 5,0 par addition de soude concentrée à 30 %.

Sur une fraction aliquote de chaque solution, le polysaccharide est isolé par précipitation à l'isopropanol et séché. On détermine la teneur en groupements glucuronique, acétique et pyruvique de la molécule de xanthane.

Les groupements glucuronique et acétique sont dosés par chromatographie en phase gazeuse. Les groupements pyruvique sont dosés par la méthode décrite dans "Food Chemicals Cody - 3ème édition - Xanthan gum".

Sur chaque solution restante, on mesure la filtrabilité au moyen d'un test simulant le comportement des solutions dans un milieu poreux.

Lors de l'injection d'un moût dilué de polysaccharide à l'intérieur d'une formation souterraine poreuse, les débris cellulaires non déformables sont arrêtés sur les premières couches du milieu traversé. Le taux de cisaillement étant alors important, les microgels et particules de faibles dimensions peuvent passer à travers les pores. A des distances plus importantes du puits d'injection, le taux de cisaillement étant plus faible, ces particules peuvent colmater le milieu en profondeur. Pour évaluer la filtrabilité dans ces deux conditions, on effectue une première filtration sur filtre 5 µm simulant l'injectabilité de la solution dans les premières épaisseurs de la roche, puis une seconde filtration sur filtre 1,2 µm simulant le comportement en profondeur de la molécule de xanthane dans la formation rocheuse.

Test de filtrabilité

Chaque solution est diluée avec une saumure de manière à obtenir une solution finale à 1.000 ppm en poids de xanthane avec une concentration en sels de 11 % (NaCl - chlorures divalents - Rapport 5/1). La viscosité de la solution à 1.000 ppm est mesurée (V1). Cette solution est filtrée à travers un filtre MF-Millipore ® de 47 mm de diamètre et 5 µm de diamètre de pores sous une pression de 3 bars. La viscosité du filtrat est mesurée (V2). Le filtrat récupéré est ensuite filtré à travers un filtre Versapor Gelman ® de 47 mm de diamètre, 1,2 µm de diamètre de pores également sous une pression de 3 bars. La viscosité finale est mesurée (V3).

Toutes les mesures de viscosité sont faites à l'aide d'un viscosimètre Brookfield LVT muni d'un adaptateur UL, à la vitesse de 6 tours/min (7,3 sec $^{-1}$) à 25°C.

On note pour la filtrabilité (F) le temps écoulé en minutes et secondes pour le passage de 1.000 ml de solution. Si le temps excède 10 minutes, la valeur entre parenthèses indique le volume en ml de solution qui a filtré.

Les résultats des essais 1 à 5 figurent sur le Tableau I, en comparaison avec le moût de départ (Témoin) que n'a pas subi de traitement thermique.

On peut voir que seul le taux de groupes acetyl est modifié par le traitement, les taux de pyruvique et de glucuronique restant sensiblement constants.

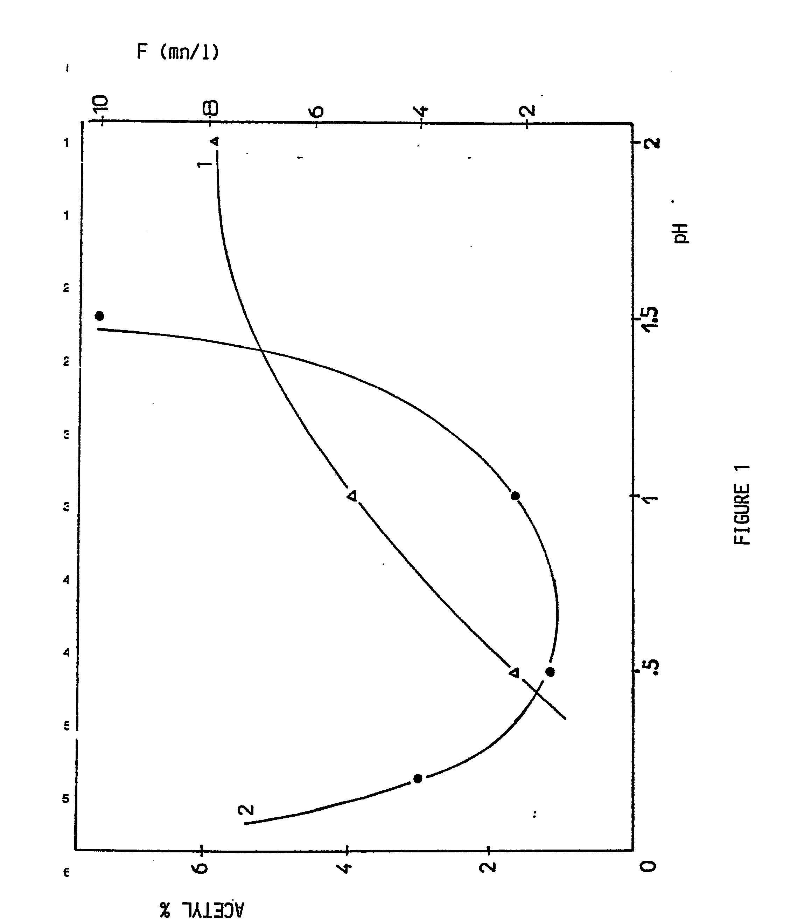

Les résultats obtenus, traduits sous forme de courbes représentant l'évolution du taux de groupes acétique (courbe 1) et de la filtrabilité (minutes/litre) sur filtre 1,2 µm (courbe 2) en fonction du pH sont reportés sur la Figure 1.

## TABLEAU I

| Essais | pH | Gluc % | Acet % | Pyr. % | V1 mPa.s | F 5 µm | V2 mPa.s | F 1,2 µm | V3 mPa.s |
|---|---|---|---|---|---|---|---|---|---|
| Témoin | | 18,5 | 6,3 | 2,5 | 37 | (260) 10' | 32 | (110) 10' | 30,5 |
| 1 | 0,2 | – | – | – | 44,5 | 2'50" | 50 | 4' | 51 |
| 2 | 0,5 | 17,8 | 1,65 | 2,5 | 48 | 45" | 41 | 1'30" | 38,5 |
| 3 | 1 | 18,6 | 3,95 | 2,3 | 37,5 | 35" | 37,5 | 2'10" | 36 |
| 4 | 1,5 | – | – | – | 39 | (760) 10' | 37 | (950) 10' | 35 |
| 5 | 2 | 18,4 | 5,9 | 2,6 | 38 | (620) 10' | 38 | (400) 10' | 41 |

Exemple 2

On réalise une série d'essais de la manière décrite à l'exemple 1 à partir du même moût de fermentation en faisant varier la température et la durée du traitement comme indiqué sur le Tableau II. Chaque solution est ajustée à pH 1 au moyen d'acide nitrique.

Les résultats des essais 6 à 11 au regard de l'analyse, la filtrabilité et la viscosité figurent sur le Tableau II.

On remarque que le taux d'acétate baisse régulièrement avec la durée du traitement, le taux de pyruvate restant sensiblement constant.

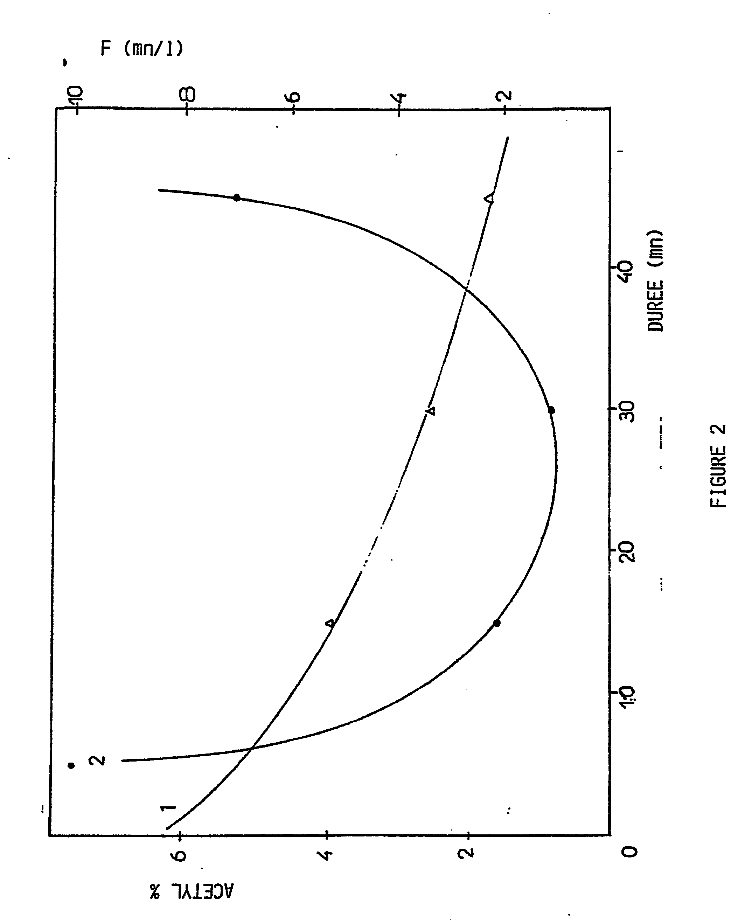

On a reporté sur la Figure 2, les résultats obtenus sous forme de courbes représentant l'évolution du taux de groupes acétique (courbe 1) et de la filtrabilité (minutes/litre) sur filtre 1,2 µm (courbe 2) en fonction de la durée du traitement à la température de 80°C.

Exemple 3

On réalise encore une série d'essais à partir du même moût et de la manière décrite à l'exemple 1 en faisant varier la température. Pour chaque essai, la solution est ajustée à pH 1 par addition d'acide nitrique, chauffée 15 minutes aux températures indiquées sur le Tableau III puis traitée comme dans l'exemple 1.

Les résultats figurent dans le Tableau III.

On note que le taux de groupes acetyl baisse avec l'augmentation de la température.

La dépyruvilation commence aux environs de 100°C et s'accompagne d'une diminution importante de la filtrabilité.

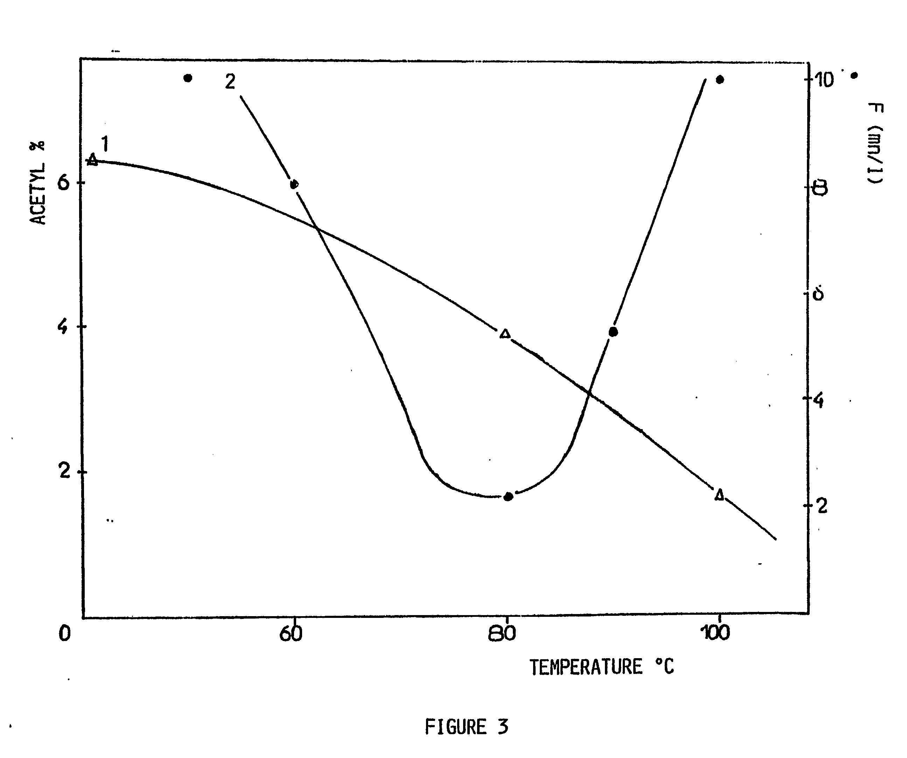

L'évolution du taux de groupes acétyl (%) et de la filtrabilité (minutes/litre) sur filtre, 1,2 µm en fonction de la température est reportée sur la Figure 3, courbes 1 et 2 respectivement.

TABLEAU II

| Essai | Conditions du traitement pH 1: Température (°C): Durée (minutes): | Gluc % | Acet % | Pyr. % | V1 mPa.s | F 5 µm | V2 mPa.s | F 1,2 µm | V3 mPa.s |
|---|---|---|---|---|---|---|---|---|---|
| Témoin | — | 18,5 | 6,3 | 2,5 | 37 | (260) 10' | 32 | (110) 10' | 30,5 |
| 6 | 80°C/5' | — | — | — | 38 | (980) 10' | 37,5 | (680) 10' | 33,5 |
| 7 | 100°C/5' | — | — | — | 40 | (840) 10' | 38,5 | (950) 10' | 35 |
| 8 | 80°C/15' | 18,6 | 3,95 | 2,3 | 37,5 | 35" | 37,5 | 2'10" | 36 |
| 9 | 80°C/30' | 19,1 | 2,54 | 2,34 | 32 | 30" | 33,5 | 1'25" | 33,5 |
| 10 | 80°C/45' | 18,6 | 1,52 | 2,4 | 30 | (800) | 31 | 7' | 30 |
| 11 | 50°C/45' | | | | 40 | (870) 10' | 39 | (460) 10' | 38,5 |

EP 0 215 692 B1

## TABLEAU III

| Essais | T°C | Gluc % | Acet % | Pyr. % | V1 mPa.s | F 5 µm | V2 mPa.s | F 1,2µm | V3 mPa.s |
|---|---|---|---|---|---|---|---|---|---|
| Témoin | | 18,5 | 6,3 | 2,5 | 37 | (260) 10' | 32 | (110) 10' | 30,5 |
| 12 | 50 | − | − | − | 40 | (750) 10' | 39 | (250) 10' | 36 |
| 13 | 60 | − | − | − | 40,5 | (840) 10' | 39,5 | 8' | 36 |
| 14 | 80 | 18,6 | 3,95 | 2,3 | 37,5 | 35" | 37,5 | 2'10" | 36 |
| 15 | 90 | − | − | − | 43 | 3' | 41,5 | 5'15" | 41 |
| 16 | 100 | 19,2 | 1,64 | 1 | 37 | (430) 10' | 33 | (240) 10' | 33,5 |

### Exemple 4

Cet exemple démontre que le traitement à la chaleur de la gomme xanthane dans des conditions similaires de pH, température et durée ne procure pas des résultats identiques selon que le pH est ajusté au moyen d'acide nitrique ou au moyen d'un acide différent.

On donne dans le Tableau IV les résultats des essais 17 (invention) et 18 à 21 (comparatifs) obtenus par traitement d'un moût de fermentation contenant 32 g de matières sèches précipitables à l'isopropanol par Kg de moût. Le traitement est réalisé selon la méthode décrite à l'exemple 1, le pH étant ajusté au moyen de différents acides comme indiqué dans le Tableau IV.

On remarque que le traitement par l'acide sulfurique et par l'acide oxalique conduit à une dépyruvilation importante qui n'est pas atteinte par l'acide nitrique.

### Exemple 5

Cet exemple démontre les performances accrues de filtrabilité obtenues par le traitement selon l'invention en comparaison avec d'autres traitements thermiques.

On utilise le même moût de fermentation que celui de l'exemple 4. Le pH est ajusté soit à pH 1 (Essai 22 selon l'invention) ou pH 5,5 (Essai 23 comparatif) au moyen d'acide nitrique, soit à pH 8 (Essais 24-25 comparatifs) au moyen de soude concentrée à 30 %.

Les résultats des essais au regard du test de filtrabilité (Tableau V) démontrent que les solutions diluées préparées à l'aide des moûts traités conformément à l'invention sont aisément injectables dans des milieux poreux de perméabilité inférieure à 1 Darcy, contrairement aux solutions préparées à partir de moûts qui ont été traités par la chaleur dans d'autres conditions.

TABLEAU IV

| Essai | Conditions du traitement Acide | pH – T (°C) Durée (mn) | Acet % | Pyr. % | V1 mPa.s | F 5 µm | V2 mPa.s | F 1,2 µm | V3 mPa.s |
|---|---|---|---|---|---|---|---|---|---|
| Témoin | – | – | 6,6 | 3,9 | 34,5 | (510) 10' | 32 | (100) 10' | 27 |
| 17 | $HNO_3$ | pH 1 – 80°C 15' | 3,3 | 3,8 | 39,5 | 30" | 36,5 | 1' | 35 |
| 18 | $H_2SO_4$ | pH 1 – 80°C 15' | 2,3 | 2,2 | 38,5 | (200) 10' | 37 | (160) 10' | 34 |
| 19 | $C_2H_2O_4$ | pH 1,3 – 80°C 15' | 3,9 | 2,2 | 42 | (20) 10' | | | |
| 20 | $C_2H_2O_4$ | pH 1,3 – 80°C 30' | | | 39 | (20) 10' | | | |
| 21 | $CF_3COOH$ | pH 2 – 80°C 15' | | | 41 | 5'30" | 40 | (640) 10' | 40,1 |

EP 0 215 692 B1

## TABLEAU V

| Essai | Conditions du traitement pH - T (°C) durée = mn | V1 mPa.s | F 5 µm | V2 mPa.s | F 1,2 µm | V3 mPa.s |
|---|---|---|---|---|---|---|
| Témoin | – | 34,5 | (510) 10' | 32 | (100) 10' | 27 |
| 22 | pH 1 - 90°C 15' | 39,5 | 30" | 36,5 | 1' | 35 |
| 23 | pH 5,5 - 100°C 15' | 37 | (750) 10' | 33 | (250) 10' | 26 |
| 24 | pH 8 - 70°C 15' | 38,5 | (250) 10' | 37 | (80) 10' | 29,5 |
| 25 | pH 8 - 90°C 15' | 37,5 | (190) 10' | 38,5 | (150) 10' | 33 |

### Exemple 6

Un moût de fin de fermentation est amené à pH 1 par addition de $HNO_3$ et traité à 85° C pendant 15 mn. Les matières sèches sont précipitées par addition d'isopropanol, filtrées et séchées jusqu'à une teneur en humidité résiduelle de 8 %.

On évalue la filtrabilité d'une solution aqueuse à 1 000 ppm préparée à partir de la poudre récupérée comparativement à celle d'une solution préparée à partir de poudre récupérée dans les mêmes conditions à partir du même moût non traité.

Pour préparer la solution à 1.000 ppm, on dissout la poudre dans la saumure utilisée pour le test de filtrabilité, par agitation à l'aide d'une turbine Rayneri ® tournant à 1.500 tours/mn.

Les résultats sont donnés dans le Tableau VI. On constate que la solution obtenue à partir de poudre qui a été récupérée du moût traité selon l'invention n'est colmatante ni sur le filtre Millipore ® de 5µm simulant l'injectabilité au voisinage d'un puits, ni sur le filtre Gelman ® 1,2 µm, ce qui semble démontrer l'absence de microgels habituellement caractéristiques de ce type de préparation.

### TABLEAU VI

| | Traitement | Précipitation | Filtrabilité solution 1 g/l sous 2,7 bars | | |
|---|---|---|---|---|---|
| | | | Millipore 5 µm | Gelman 1,2 µm | Viscosité après filtration (7,3 sec.$^{-1}$) |
| Moût fin de fermentation | néant (témoin) | Isopropanol | (650) 90" | 1 l en 2'50" | 29,5 mPa.s |
| | pH 1 ($HNO_3$) 80°C 15 mn | Isopropanol | 1 l en 30" | 1 l en 1' | 28 mPa.s |

Exemple 7

Dans cet exemple, on utilise un moût de scléroglucane provenant de la culture de <u>Sclerotium rolfsii</u> sur un milieu contenant des hydrates de carbone et une source d'azote appropriés.

Le moût fin de fermentation est acidifié à pH 1 par addition de $HNO_3$ et traité à 80°C pendant 15 mn. Le moût traité est dilacéré à l'aide d'un mixer Waring Blender ®, puis dilué par l'eau déminéralisée et neutralisé par une base forte. L'acide oxalique produit au cours de la fermentation est précipité par addition de sel de calcium et éliminé avec les débris de mycelium par filtration.

A l'aide du moût clarifié, on prépare une solution aqueuse à 1.000 ppm en utilisant pour la dilution la même saumure que dans les exemples précédents.

Le moût fin de fermentation utilisé comme témoin comparatif est préparé de la même manière à l'exclusion du traitement thermique en présence de $HNO_3$.

Les résultats de filtrabilité figurent dans le Tableau VII.

| | Viscosité initiale (1) (mPa.s) | Filtrabilité Millipore 5 μm | Filtrabilité Gelman 1,2 μm | Viscosité finale (1) (mPa.s) |
|---|---|---|---|---|
| Moût non traité témoin | 58 | (80) 10' | (120) 10' | 48 |
| Moût traité pH 1 ($HNO_3$) 80°C, 15' | 56 | 1 1 en 1' 15" | 1 1 en 1'30" | 51 |

(1) Brookfield LVT adaptateur UL - 20°C - 7,3 $sec^{-1}$

## Revendications

1. Procédé de préparation d'un polysaccharide du type homo- ou hétéropolysaccharide de poids moléculaire élevé obtenu par fermentation d'un hydrate de carbone sous l'action de microorganismes, ledit polysaccharide étant modifié par traitement à la chaleur d'une composition aqueuse contenant 0,05 à 35% en poids de polysaccharide caractérisé en ce que:

a) On acidifie la composition par addition d'acide nitrique jusqu'à un pH compris entre 2 et 0,1.

b) On chauffe la composition à la température de 50–100°C pendant une durée comprise entre 5 et 60 minutes.

c) On refroidit la composition puis on accroît le pH à une valeur de 5 à 7 par addition d'une base.

2. Procédé selon la revendication 1, caractérisé en ce que le pH est ajusté à une valeur inférieure à 1,5 et la composition est chauffée à 60–90°C pendant une durée comprise entre 10 et 45 minutes.

3. Procédé selon l'une des revendications 1 ou 2 dans lequel la composition aqueuse de polysaccharide est un moût entier de fermentation.

4. Procédé selon l'une des revendications 1 ou 2 dans lequel la composition aqueuse est une solution obtenue par dissolution de poudre de polysaccharide de qualité commerciale.

5. Procédé selon l'une des revendications 1 à 4, caractérisé en ce que le polysaccharide est la gomme Xanthane.

6. Procédé de préparation selon l'une des revendications 1 à 4, caractérisé en ce que le polysaccharide est le scléroglucane.

7. Procédé de préparation selon l'une des revendications 1 à 4, caractérisé en ce que le polysaccharide est obtenu par fermentation d'un hydrate de carbone sous l'action de microorganismes appartenant au genre Agrobacterium.

8. Procédé de préparation selon l'une des revendications 1 à 7, caractérisé en ce que suite à l'étape c) de refroidissement et d'accroissement du pH de la composition à une valeur de 5 à 7, on isole de ladite composition ledit polysaccharide sous forme d'une poudre, par précipitation ou séchage.

9. Procédé de préparation selon l'une des revendications 1 à 7, caractérisé en ce que suite à l'étape b) de chauffage de la composition, on ajoute à ladite composition un biocide et/ou une enzyme.

10. Procédé de préparation selon la revendication 8, caractérisé en ce qu'on ajoute à ladite poudre un biocide et/ou une enzyme.

11. Gomme Xanthane modifiée, caractérisée en ce qu'elle comporte un taux de groupes acétiques compris entre 1,52 et 3,95%.

12. Gomme Xanthane modifiée selon la revendication 11, caractérisée en ce qu'elle comporte un taux de groupes pyruviques inférieur de 0 à 8% au taux de groupes pyruviques d'une gomme Xanthane native, non modifiée.

## Claims

1. Process for the preparation of a high molecular weight polysaccharide of the homo- or heteropolysaccharide type, obtained from the fermentation of a carbohydrate by the action of microorganisms, the said polysaccharide being modified by heat treatment of an aqueous composition containing 0.05 to 35% by weight of polysaccharide, characterized in that:
a) the composition is acidified by adding nitric acid until a pH of between 2 and 0.1 is obtained,
b) the composition is heated to a temperature of 50–100°C for a period of between 5 and 60 minutes and
c) the composition is cooled and the pH is increased to a value of 5 to 7 by adding a base.

2. Process according to Claim 1, characterized in that the pH is adjusted to a value less than 1.5 and the composition is heated to 60–90°C for a period of between 10 and 45 minutes.

3. Process according to one of Claims 1 or 2, in which the aqueous polysaccharide composition is a whole fermentation must.

4. Process according to one of Claims 1 or 2, in which the aqueous composition is a solution obtained by dissolving commercial-grade polysaccharide powder.

5. Process according to one of Claims 1 to 4, characterized in that the polysaccharide is xanthan gum.

6. Preparation process according to one of Claims 1 to 4, characterized in that the polysaccharide is scleroglucan.

7. Preparation process according to one of Claims 1 to 4, characterized in that the polysaccharide is obtained from the fermentation of a carbohydrate by the action of microorganisms belonging to the genus Agrobacterium.

8. Preparation process according to one of Claims 1 to 7, characterized in that, following step (c) of cooling and increasing the pH of the composition to a value of 5 to 7, the said polysachharide is isolated from the said composition in the form of a powder, by precipitation or drying.

9. Preparation process according to one of Claims 1 to 7, characterized in that, following step (b) of heating the composition, a biocide and/or an enzyme is/are added to the said composition.

10. Preparation process according to Claim 8, characterized in that a biocide and/or an enzyme is/are added to the said powder.

11. Modified xanthan gum, characterized in that it has an acetyl group content of between 1.52 and 3.95%.

12. Modified xanthan gum according to Claim 11, characterized in that it has a pyruvic group content 0 to 8% less than the pyruvic group content of an unmodified native xanthan gum.

## Patentansprüche

1. Verfahren zur Herstellung eines Polysaccharids vom Typ Homo- oder Heteropolysaccharid mit erhöhtem Molekulargewicht, erhalten durch Fermentation eines Kohlehydrats unter Einwirkung von Mikroorganismen, wobei dieses Polysaccharid durch Wärmebehandlung einer wässrigen Zusammensetzung modifiziert wird, die 0,05 bis 35 Gew.% an Polysaccharid enthält, dadurch gekennzeichnet, daß:
a) man die Zusammensetzung durch Zugabe von Salpetersäure bis auf einen pH zwischen 2 und 0,1 ansäuert;
b) man die Zusammensetzung auf eine Temperatur zwischen 50 und 100°C für eine Zeitdauer von 5 bis 60 Minuten erwärmt;
c) man die Zusammensetzung abkühlt und dann den pH auf einen Wert von 5 bis 7 durch Zugabe einer Base erhöht.

2. Verfahren nach Anspruch 1, dadurch gekennnzeichnet, daß der pH auf einen Wert unterhalb von 1,5 eingestellt wird und die Zusammensetzung auf 60 bis 90°C für die Zeitdauer von 10 bis 45 Minuten erwärmt wird.

3. Verfahren nach einem der Ansprüche 1 oder 2, in dem die wässrige Zusammensetzung des Polysaccharids eine vollständige Fermentationsmaische ist.

4. Verfahren nach einem der Ansprüche 1 oder 2, in dem die wässrige Zusammensetzung eine Lösung ist, die durch Auflösung eines Polysaccharid-Pulvers handelsüblicher Qualität erhalten wurde.

5. Verfahren nach einem der Ansprüche 1 bis 4, dadurch gekennzeichnet, daß das Polysaccharid Xanthangummi ist.

6. Herstellungsverfahren gemäß einem der Ansprüche 1 bis 4, dadurch gekennzeichnet, daß das Polysaccharid Skleroglucan ist.

7. Herstellungsverfahren nach einem der Ansprüche 1 bis 4, dadurch gekennzeichnet, daß das Polysaccharid durch Fermentation eines Kohlenhydrats unter Einwirkung von Mikroorganismen erhalten wird, die zur Gattung Agrobakterium gehören.

8. Herstellungsverfahren nach einem der Ansprüche 1 bis 7, dadurch gekennzeichnet, daß man im Anschluß an den Schritt c) der Abkühlung und Erhöhung des pH der Zusammensetzung auf einen Wert von 5 bis 7, aus dieser Zusammensetzung das Polysaccharid in Form eines Pulvers durch Ausfällung oder Trocknung isoliert.

9. Herstellungsverfahren nach einem der Ansprüche 1 bis 7, dadurch gekennzeichnet, daß man im Anschluß an Schritt b) der Erwärmung der Zusammensetzung zu dieser Zusammensetzung ein Biozid und/oder ein Enzym hinzugibt.

10. Herstellungsverfahren nach Anspruch 8, dadurch gekennzeichnet, daß man zu diesem Pulver ein Biozid und/oder ein Enzym zugibt.

11. Modifiziertes Xanthangummi, dadurch gekennzeichnet, daß es einen Anteil an Acetylgruppen zwischen 1,52 und 3,95 % enthält.

12. Modifiziertes Xanthangummi nach Anspruch 11, dadurch gekennzeichnet, daß es einen Anteil an Brenztraubensäuregruppen enthält, der 0 bis 8 % niedriger als der Anteil an Brenztraubensäurengruppen eines nativen nicht-modifizierten Xanthangummis ist.

FIGURE 1

FIGURE 2

FIGURE 3

EP 0 215 692 B1